# EUROPEAN PATENT APPLICATION

(11) **EP 4 650 201 A1**
(43) Date of publication of application: **19.11.2025**
(21) Application number: 25174711.9
(22) Date of filing: 07.05.2025
(51) Int. Cl.: B60K 1/00

(54) **FRONT STRUCTURE OF VEHICLE**

(30) Priority: 14.05.2024 JP 2024078917
(71) Applicant: MAZDA MOTOR CORPORATION, Hiroshima 730-8670 (JP)
(72) Inventor: Nakamura, Satoshi, Aki-gun, Hiroshima, 730-8670 (JP); Mizuochi, Hiroyuki, Aki-gun, Hiroshima, 730-8670 (JP)
(74) Representative: Lorenz Seidler Gossel Part. mbB

(57) **Abstract**

The present invention relates to a front structure (1) of a vehicle, which comprises a pair of right-and-left side frames (33) extending in a longitudinal direction, a cross member (34) provided to extend between the side frames (33), and an on-board equipment, for example a non-contact charger (70), positioned between the side frames (33), the on-board equipment having a body portion (74), wherein the on-board equipment comprises front-side fixation portions (76) fixed to the cross member (34) and back-side fixation portions (77) positioned in back of the front-side fixation portions (76) and fixed to the side frames (33) through fixation structures (X) in which the on-board equipment is detachable from the side frames (33) when receiving an impact load applied from a front side of the structure.

## Description

### BACKGROUND OF THE INVENTION

The present invention relates to a front structure of a vehicle, and a vehicle comprising such a front structure.

JP 2020-82948 A discloses a front structure of a vehicle which comprises a suspension member fixed to a body frame via a connecting member and a power (electric power) receiving device attached to a lower face of the suspension member and fixed to the body frame via the connecting member.

In the front structure of the vehicle of the above-described patent document, when an external force is applied from a forward side or a rearward side, the connecting member bends downward and thereby the power receiving device connected to the connecting member moves downward, so that a power storage device which is arranged in back of the power receiving device is suppressed from contacting the power receiving device.

According to the front structure of the vehicle of the above-described patent document, since the power receiving device is fixed to a side frame which extends in a vehicle longitudinal direction of the suspension member, the impact-load absorption performance of the side frame which is supposed to be deformed when a collision load is applied from the forward side is hindered (deteriorated), so that an impact load may not be absorbed sufficiently through deformation of the side frame.

A member to hinder the above-described deformation of the side frame is not limited to the power receiving device but any on-board equipment which is arranged between a pair of side frames provided on both sides of the vehicle, such as an auxiliary device, may raise the same problem.

### SUMMARY OF THE INVENTION

An object of the present invention is to provide a front structure of a vehicle which does not hinder the deformation of the side frames even in a case where the on-board equipment is positioned between the right-and-left side frames which are configured to absorb the impact load through their deformation when the impact load is applied.

The present invention is a front structure of a vehicle, comprising a pair of right-and-left side frames extending in a longitudinal direction, a cross member provided to extend between the side frames, and an on-board equipment positioned between the side frames, the on-board equipment having a body portion, wherein the on-board equipment comprises front-side fixation portions fixed to the cross member and back-side fixation portions positioned in back of the front-side fixation portions and fixed to the side frames through fixation structures in which the on-board equipment is detachable from the side frame when receiving an impact load applied from a front side of the structure.

According to the present invention, since the on-board equipment is detached from the side frames at the second fixation portion when the impact load is applied from the vehicle forward side, even in a case where the on-board equipment is positioned between the right-and-left side frames, it can be suppressed that the deformation of the side frames is hindered by the on-board equipment.

Thus, the present invention can provide the front structure of the vehicle which does not hinder the deformation of the side frames even in the case where the on-board equipment is positioned between the right-and-left side frames which are configured to absorb the impact load through their deformation when the impact load is applied.

The present invention will become apparent from the following description which refers to the accompanying drawings.

### BRIEF DESCRIPTION OF THE DRAWINGS

FIG. **1** is a plan view of a front structure of a vehicle according to an embodiment of the present invention.
FIG. **2** is a side view of the front structure of the vehicle according to the embodiment of the present invention.
FIG. **3** is a perspective view of a subframe and a non-contact charger.
FIG. **4** is a plan view of the subframe and the non-contact charger.
FIG. **5** is a perspective view of the non-contact charger alone.
FIG. **6** is a schematic sectional view taken along line VI-VI of FIG. **3****.**
FIGS. **7A, 7B, 7C** are explanatory diagrams of a manner in which an impact load is applied to the subframe from a forward side.

### DETAILED DESCRIPTION OF THE INVENTION

Hereafter, an embodiment of the present invention will be described referring to the accompanying drawings.

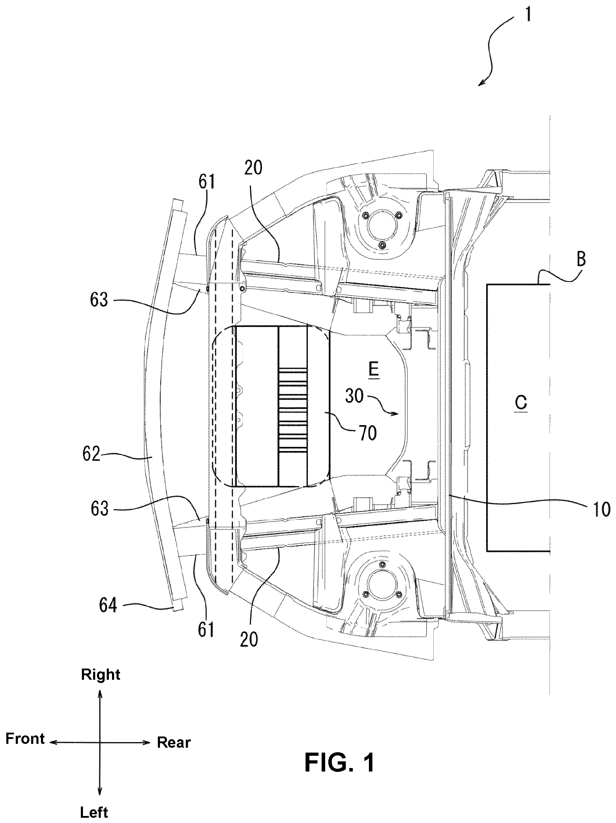

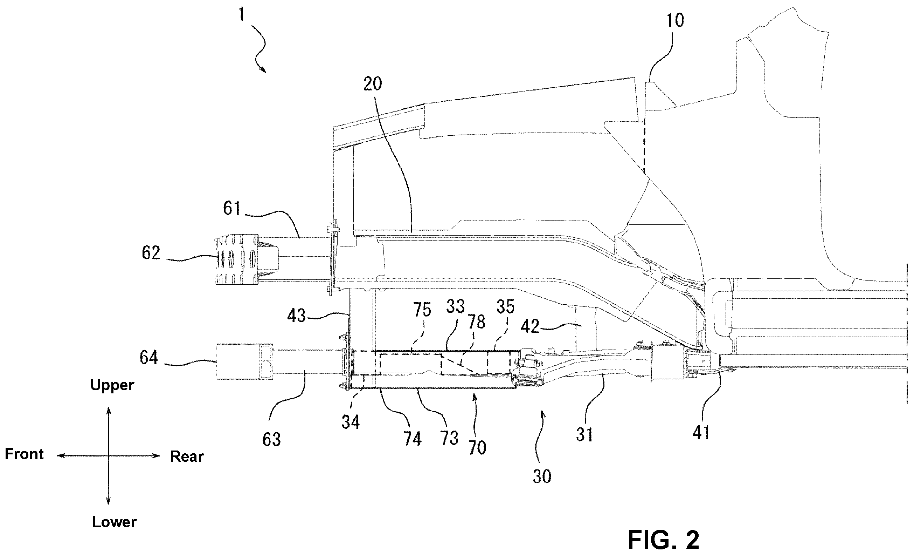

FIGS. **1** and **2** show a front structure **1** of a vehicle according to the embodiment of the present invention. In the present embodiment, the vehicle provided with the front structure **1** of the present invention is an electric automobile.

As shown in FIGS. **1** and **2****,** the front structure **1** of the electric automobile comprises a dash panel **10** which partitions a cabin **C** from an engine **E** where a drive source, such as a motor, is arranged, a pair of right-and-left front side frames **20** which extend forward from the dash panel **10,** and a subframe (suspension cross member) **30** which is arranged below the front side frames **20.**

A main crash can **61,** which is made of a cylindrical body or the like to absorb an impact load applied from a vehicle forward side, extends forward at each front end of the front side frames **20.** The pair of right-and-left main crash cans **61** are interconnected by a bumper reinforcement **62** which extends in a vehicle width direction.

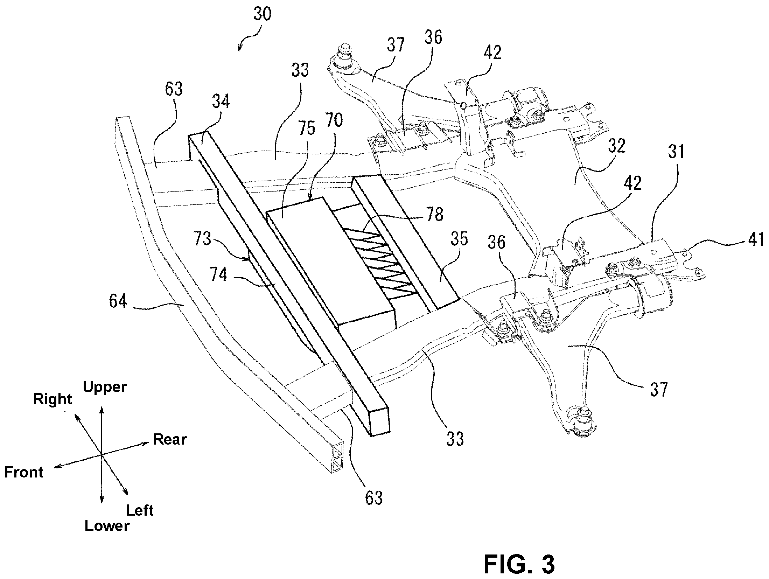

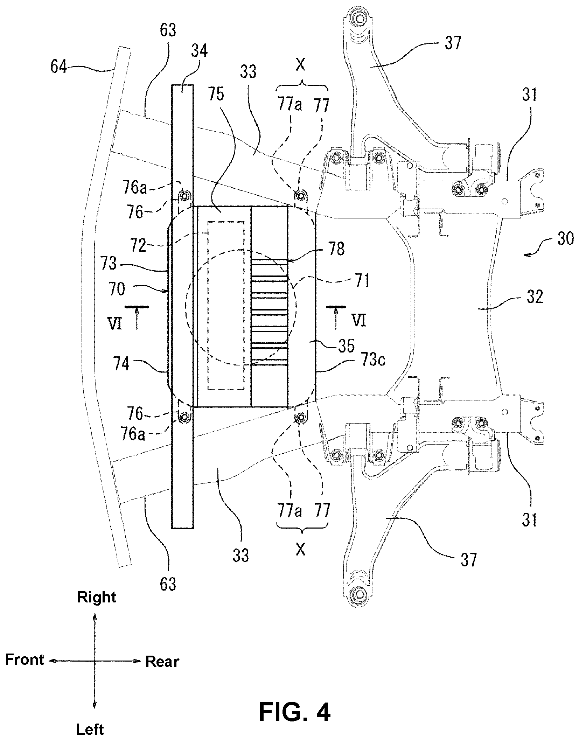

As shown in FIGS. **3** and **4****,** the subframe **30** comprises a pair of right-and-left suspension-link support portions (hereafter, referred to as "link support portions" in some cases) **31,** a main cross member **32** which interconnect the link support portions **31** in the vehicle width direction, a pair of right-and-left extension side frames (hereafter, referred to as "side frames") **33** which extend forward from respective front ends of the link support portions **31,** and a front cross member **34** and a rear cross member **35** which interconnect respective front ends and respective rear ends of the side frames **33** in the vehicle width direction.

A sub crash can **63,** which is made of a cylindrical body or the like, is attached to each front end of the side frames **33** via each set plate or the like. Respective front ends of a pair of right-and-left sub crash cans **63** are interconnected by a beam member **64** which extends in the vehicle width direction.

Each of the link support portions **31** is of a cylindrical member extending in the longitudinal direction. The right-and-left link support portions **31** extend roughly in parallel to each other. A front suspension arm **37** is attached to an outward side, in the vehicle width direction, of the link support portion **31** via a bracket **36.** A vehicle fixation portion **41** to fix the subframe **30** to a floor frame is provided at a rear end of each of the link support portions **31,** and a rear-side pole-shaped member **42** to connect the front side frame **20** and the subframe **30** is provided at a middle portion, in the longitudinal direction, of each of the link support portions **31** (at a front end of the main cross member **32).**

The main cross member **32** extends in the vehicle width direction and interconnects the right-and-left link support portions **31** over a range from respective rear end portions to the respective middle portions of the link support portions **31.** The main cross member **32** is of a flat shape with its smaller thickness, in the vertical direction, compared to its length or width, in the longitudinal direction or in the vehicle width direction. The main cross member **32** is joined to an inward side, in the vehicle width direction, and an upper face of each of the link support portions **31** at both end portions, in the vehicle width direction, thereof by welding or the like.

The side frame **33** is of a cylindrical member extending in the longitudinal direction. The side frame **33** is arranged such that its front portion is located on the outward side, in the vehicle width direction, of its rear portion. The distance between the both-side side frames **33** becomes wider toward the vehicle forward side. A rear end of the side frame **33** is joined to the front end of the link support portion **31** by welding or the like.

The front cross member **34** is of a cylindrical member extending in the vehicle width direction. The front cross member **34** has a rectangular closed-cross section perpendicular to the vehicle width direction. The front cross member **34** is provided to extend between the respective front ends of the side frames **33.** The front cross member **34** is fixed to the side frames **33** at its both outside parts by fastening members, such as bolts or the like.

A pair of right-and-left front-side pole members **43** which stand upward from an upper face **34d** of the front cross member **34** in a pole shape are provided at the both end portions, in the vehicle width direction, of the front cross member **34.** An upper end of each of the front-side pole members **43** is joined to a lower face of a front-end portion of the front side frame **20** by the fastening member or the like.

The rear cross member **35** is of another cylindrical member extending in the vehicle width direction. The rear cross member **35** has another rectangular closed-cross section perpendicular to the vehicle width direction. The rear cross member **35** is provided to extend between the respective rear ends of the side frames **33.** The rear cross member **35** is fixed to respective inward side faces, in the vehicle with direction, of the side frames **33** at its both outside parts by welding or the like.

As shown in FIG. **1****,** the vehicle comprises a battery **B** to drive an electric drive mechanism, not illustrated, and a non-contact charger **70** to receive power (electric power) from an external side and supply the received power to the battery **B.** In the present embodiment, the battery **B** is arranged on the side of the cabin **C,** and the non-contact charger **70** is arranged in the engine room **E.** The battery **B** and the non-contact charger **70** are electrically connected so as to receive and supply the power therebetween.

The non-contact charger **70** and its fixation structure **X** will be described referring to FIGS. **1** - **6**. As shown in FIGS. **1** and **2****,** the non-contact charger **70** is arranged between the front cross member **34** and the rear cross member **35.**

As shown in FIG. **4****,** the non-contact charger **70** comprises a power-receiving coil **71** which receives the magnetic flux generated by supplying the electricity to a power-supply coil embedded at a road surface of a parking lot or the like, for example, generates the electricity by means of the electromagnetic induction, and store the power at the battery **B,** a rectifier **72** which rectifies the electricity of the power-receiving coil **71,** and a casing **73** which stores the power-receiving coil **71** and the rectifier **72** therein.

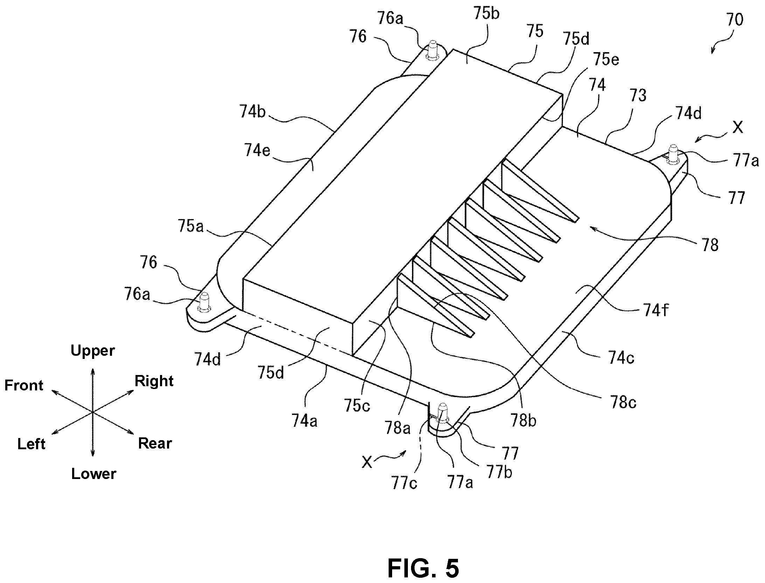

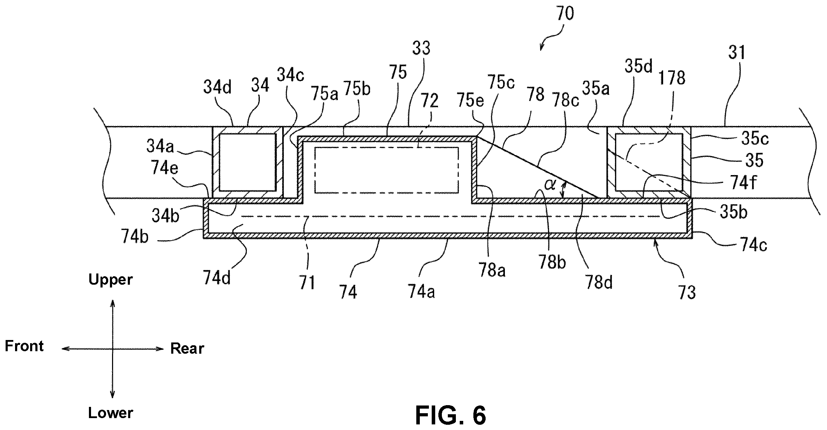

As shown in FIGS. **5** and **6****,** the casing **73** comprises a body portion **74** where the power-receiving coil **71** is stored, a protrusion portion **75** where the rectifier **72** is stored and which protrudes upward beyond the body portion **74,** fixation portions **76, 77** which protrude in a flange shape, in the vehicle width direction, from a peripheral edge portion of the body portion **74** and fixes the non-contact charger **70** to the subframe **30,** and a guide portion **78,** which is an inclination portion and connects an upper face of the body portion **74** and a rear face of the protrusion portion **75** in a braced shape.

As shown in FIG. **5****,** the body portion **74** is formed in a roughly rectangular-parallelepiped shape, which is of a flat shape with its small thickness in the vertical direction. The body portion **74** comprises a roughly rectangular-shaped bottom face portion **74a** extending substantially horizontally, a front face portion **74b** extending upward from a front edge of the bottom face portion **74a,** a rear face portion **74c** extending upward from a rear edge of the bottom face portion **74a,** a side face portion **74d** extending upward from right-and-left both-side side edges of the bottom face portion **74a,** a front-upper face portion **74e** extending rearward from an upper edge of the front face portion **74b,** and a rear-upper face portion **74f** extending forward from an upper edge of the rear face portion **74c.** The front-upper face portion **74e** has a longitudinal width which is narrower than the rear-upper face portion **74f.** The protrusion portion **75** is arranged between the front-upper face portion **74e** and the rear-upper face portion **74f.**

As shown in FIGS. **5** and **6****,** the protrusion portion **75** has the rectangular parallelepiped shape having its width longer than its longitudinal length. The protrusion portion **75** is arranged at an offset position slightly located forward from a central portion, in the longitudinal direction, of the body portion **74.** The protrusion portion **75** comprises a front face portion **75a** extending upward from a rear edge of the front-upper face portion **74e,** an upper face portion **75b** extending rearward from an upper edge of the front face portion **75a,** a rear face portion **75c** extending downward from a rear edge of the upper face portion **75b,** and a side face portion **75d** extending downward from both-side edge portions of the upper face portion **75b** and connecting the front face portion **75a** and the rear face portion **75c.**

The fixation portions **76, 77** protrude outward, in the vehicle width direction, from the side face portion **74d** of the body portion **74.** The fixation portions **76, 77** comprise the front-side fixation portions **76** which are respectively provided at a front-right side and a front-left side of the body portion **74** and the rear-side fixation portions **77** which are respectively provided at a rear-right side and a rear-left side of the body portion **74.**

The guide portion **78** is comprised of plural plate members which are of a rectangular shape in a side view. The guide portion **78** is arranged between the rear face portion **75c** of the protrusion portion **75** and the rear-upper face portion **74f** of the body portion **74.** The guide portion **78** is an inclination portion and is configured such that it slopes downward towards the rear side. The plural plate members **78** are arranged, in the vehicle width direction, at regular intervals from a central portion, in the vehicle width direction, of the body portion **74.** In the present embodiment, the guide portion **78** is made of radiator fins to cool the non-contact charger **70.**

Each of the plate members constituting the guide portion **78** includes a vertical side portion **78a** extending vertically along the rear face portion **75c,** a bottom side portion **78b** extending rearward from a lower end of the vertical side portion **78a** along the rear-upper face portion **74f,** and an inclined side portion **78c** connecting an upper end of the vertical side portion **78a** and a rear end of the bottom side portion **78b.**

The vertical side portion **78a** has substantially the same height as the rear face portion **75c** of the protrusion portion **75.** The bottom side portion **78b** extends from the rear face portion **75c** to a central portion, in the longitudinal direction, of the rear-upper face portion **74f.** The inclined side portion **78c** rises toward the forward side from a center, in the longitudinal direction, of the rear-upper face portion **74f** up to the rear-upper edge portion **75e** of the protrusion portion **75.** In the present embodiment, an angle **α** between the inclined side portion **78c** and the bottom side portion **78b** is set at 20° or more and 45° or less.

As shown in FIGS. **4** and **6****,** the body portion **74** is positioned between the side frames **33** in the vehicle width direction and provided to extend between the front cross member **34** and the rear cross member **35** as a rearward member.

The front-upper face portion **74e** of the body portion **74** overlaps the front cross member **34** in the longitudinal direction and is positioned below the front cross member **34.** The longitudinal position of the front face portion **74b** of the body portion **74** substantially matches a front face **34a** of the front cross member **34.** The longitudinal size (measures) of the front-upper face portion **74e** substantially matches the front cross member **34.** In the present embodiment, the body portion **74** is fixed to the front cross member **34** at the front-side fixation portions **76** in a state where the front-upper face portion **74e** contacts a lower face **34b** of the front cross member **34.**

At least part of the rear-upper face portion **74f** of the body portion **74** overlaps the rear cross member **35** in the longitudinal direction, and is located below the rear cross member **35.** The longitudinal position of the rear face portion **74c** of the body portion **74** almost matches a rear face **35c** of the rear cross member **35.** The longitudinal size (measures) of the rear-upper face portion **74f** is larger than the rear cross member **35,** and an inclined face **78** is arranged in the vicinity of the front face **35a** of the rear cross member **35.** In the present embodiment, the body portion **74** is fixed to the side frames **33** at the rear-side fixation portions **77** in a state where the rear-upper face portion **74f** contacts a lower face **35b** of the rear cross member **35.**

As shown in FIG. **6****,** the protrusion portion **75** is arranged between the front cross member **34** and the rear cross member **35** in the longitudinal direction. The protrusion portion **75** overlaps the front cross member **34** and the rear cross member **35** in the vertical direction. The vertical position of the protrusion portion **75** and the vertical position of the upper faces **34d, 35d** of the front-and-rear cross members **34, 35** match each other roughly.

The front face portion **75a** of the protrusion portion **75** is provided to face the rear face **34c** of the front cross member **34** from behind. The front face portion **75a** of the protrusion portion **75** faces the front cross member **34.** The rear face portion **75c** of the protrusion portion **75** is positioned in front of the rear cross member **35.**

The guide portion **78** is arranged in front of the rear cross member **35.** More specifically, a rear end **78d** of the guide portion **78** extends to the vicinity of the rear cross member **35.** In other words, the rear cross member **35** is arranged in the vicinity of the rear end **78d** of the guide portion **78.**

In the present embodiment, the meaning of the expression of "the vicinity of the rear end **78d** of the guide portion **78** includes a situation where the rear cross member **35** comes to contact the guide portion **78** when a specified impact load (e.g., the load is applied to a test vehicle body in the full-lap frontal-collision test, the offset frontal-collision test, or the like in JNCAP) is applied from the vehicle forward side. Therefore, the rear cross member **35** may be separated vertically from the guide portion **78** and overlap the rear end **78d** of the guide portion **78** in the longitudinal direction or the rear cross member **35** may be totally separated from the guide portion **78.**

As shown in FIG. **4****,** the front-side fixation portion **76** is provided to protrude outward, in the vehicle width direction, from the front-side side face portion **74d** of the body portion **74.** The front-side fixation portion **76** is located below the front cross member **34** and fixed to the front cross member **34** via a front fastening member **76a,** such as a bolt. The front-side fixation portion **76** and the front cross member **34** are fastened together by inserting the front fastening member **76a** into those members **76, 34** in their overlapping state and making the front fastening member **76a** be welded to a weld nut or the like which are provided at the front cross member **34,** for example.

The rear-side fixation portion **77** is provided to protrude outward, in the vehicle width direction, from the rear-side side face portion **74d** of the body portion **74.** The rear-side fixation portion **77** is located below a rear-end side of the side frame **33** and fixed to side frame **33** via a rear fastening member **77a,** such as a bolt. The non-contact charger **70** is fixed to the subframe **30** by inserting the rear fastening member **77a** into the rear-side fixation portion **77** and the side frame **33** in their vertical-overlapping state from below and making the rear fastening member **77a** be welded to a weld nut or the like which are provided at the rear cross member **35,** for example.

The rear-side fixation portion **77** has the fixation structure **X** which is detachable due to the impact load applied from the vehicle forward side. The fixation structure **X** is configured to get broken when the impact load is applied from the vehicle forward side. In the present embodiment, the size (strength) of the rear fastening member (bolt) **77a** is set such that when the impact load is applied from the vehicle forward side, the rear fastening member **77a** gets broken because of tension and/or shear, so that the rear-side fixation portion **77** can be detached from the side frame **33.** The strength of the rear fastening member **77a** is smaller than that of the front fastening member **76a.** The rear fastening member **77a** may be made of a bolt which is configured such that its base portion can get broken due to the impact load applied from the vehicle forward side, for example.

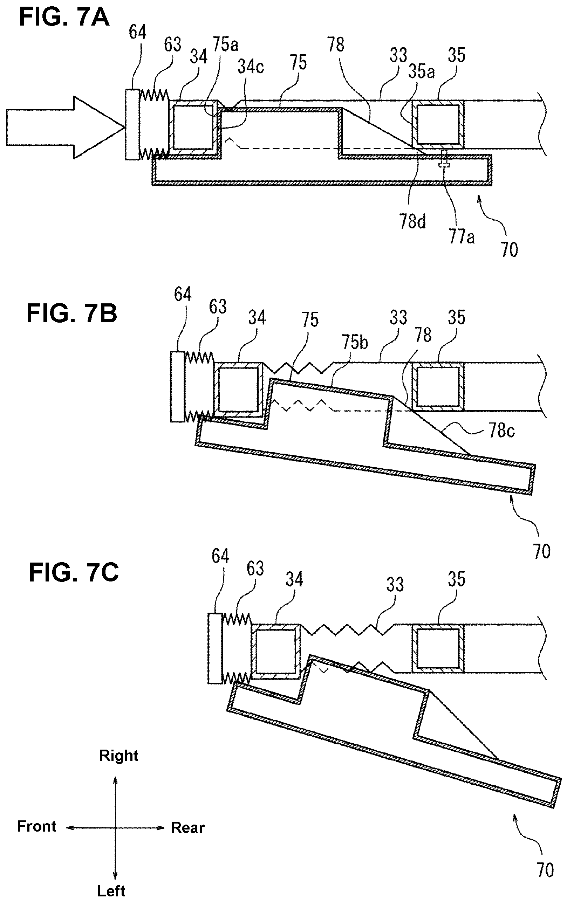

According to the above-described front structure **1** of the vehicle, when the impact load is applied from the vehicle forward side, as shown in FIG. **7A****,** the beam member **64** and the sub crash cans **63** crush and move back, so that the side frames **33** start their crushing deformation and moving back. When the side frames **33** move back, the front cross member **34** fixed to the front end portions of the side frames **33** moves back. The rear face **34c** of the front cross member **34** moving back contacts the front face portion **75a** of the protrusion portion **75** and thereby part of the impact load is transmitted to the non-contact charger **70,** so that the load acts on the rear fastening members **77a** of the rear-side fixation portions **77** in a shearing direction. Thereby, the rear fastening members **77a** as the fixation structures **X** between the rear-side fixation portions **77** and the side frames **33** get broken, so that joining of the rear fastening members **77a** and the side frames **33** is released.

As shown in FIG. **7B****,** when the non-contact charger **70** retreats, the inclined side portions **78c** of the guide portion **78** and the rear cross member **35** contact each other, and the non-contact charger **70** moves downward and rearward relative to the rear cross member **35.** Herein, since the moving of the rear cross member **35** performs so as to push down the non-contact charger **70,** the fastening members **77a** fastened in the vertical direction are drawn down from the side frames **33,** so that the non-contact charger **70** gets detached from the side frames **30.**

As shown in FIG. **7C****,** as the crushing deformation of the side frames **33** progresses, the non-contact charger **70** moves rearward such that the rear cross member **35** is located at the upper face portion **75b** of the protrusion portion **75** by guiding of the guide portion **78.** Thereby, since the protrusion portion **75** moves below the rear cross member **35,** it can be suppressed that the crushing deformation of the side frames **33** is hindered like a case where the protrusion portion **75** gets stuck between the front cross member **34** and the rear cross member **35.**

The front structure **1** of the vehicle according to the above-described embodiment performs the following effects.

The front structure **1** of the vehicle comprises a pair of right-and-left side frames **33** extending in the longitudinal direction, the front cross member **34** provided to extend between the side frames **33,** and the non-contact charger **70** as an on-board equipment positioned between the side frames **33,** wherein the non-contact charger **70** comprises the front-side fixation portion **76** fixed to the front cross member **34** and the rear-side fixation portion **77** positioned in back of the front fixation portion **76** and fixed to the side frames **33** through the fixation structure in which the non-contact charger **70** is detachable from the side frames **33** when receiving the impact load applied from the vehicle forward side.

According to the present embodiment, since the non-contact charger **70** is detached from the side frames **33** at the rear fixation portion **77** when the impact load is applied from the vehicle forward side, even in a case where the non-contact charger **70** is positioned between the right-and-left side frames **33,** it can be suppressed that the deformation of the side frames **33** is hindered by the non-contact charger **70.**

The front structure **1** further comprises the rear cross member **35** (the suspension cross member **30)** as the rearward member arranged in back of the front cross member **34,** wherein the non-contact charger **70** includes the guide portion **78** to move the non-contact charger **70** downward when the non-contact charger **70** and the rear cross member **35** contact each other due to the impact load applied from the vehicle forward side.

According to this structure, the non-contact charger **70** can be moved downward and get detached properly when the impact load is applied from the vehicle forward side.

The guide portion is provided at the non-contact charger **70,** and the guide portion is the guide portion **78** which faces the front face **35a** of the rear cross member **35** and is inclined such that it slopes downward towards the rear side.

According to this structure, the non-contact charger **70** can be made to move downward below the rear cross member **35** by the guide portion **78** easily when the impact load is applied from the vehicle forward side, so that detachment of the non-contact charger **70** from the side frames **33** can be promoted.

The rear cross member **35** is arranged in the vicinity of the rear end of the guide portion **78.**

According to this structure, when the non-contact charger **70** moves rearward, the rear cross member **35** can be made to contact properly by the guide portion **78.**

The rear fastening member **77a** of the rear-side fixation portion **77** (fixation structure **X)** is configured to get broken when the impact load is applied from the vehicle forward side.

According to this structure, the rear fastening member **77a** is broken by the impact load applied from the vehicle forward side, so that the non-contact charger **70** can be detached from the side frames **33** easily.

The non-contact charger **70** comprises the protrusion portion **75** having the face which faces the rear face **34c** of the front cross member **34.**

According to this structure, since the front cross member **34** pushes back the front-side bottom face portion **74a** and the projection portion **75** of the non-contact charger **70,** the non-contact charger **70** can be detached from the side frames **33** easily.

The non-contact charger **70** comprises the rear-upper face portion **74f** extending rearward from the protrusion portion **75,** and the guide portion **78** is provided to stand toward the rear-upper edge portion **75e** of the protrusion portion **75** from the rear-upper face portion **74f.**

According to this structure, the rear cross member **35** can be easily made to move to the upper face portion **75b** of the protrusion portion **75** of the non-contact charger **70** when the impact load is applied from the vehicle forward side. It can be suppressed that a step difference between the rear face portion **75c** of the protrusion portion **75** and the guide portion **78** occurs and thereby the moving of the rear cross member **35** is hindered like a situation where the guide portion **78** is located below the rear-upper edge portion **75e** of the protrusion portion **75.**

The rear cross member **35** is part of the suspension cross member (subframe) **30** to support the suspension.

According to this structure, the non-contact charger **70** can be detached from the side frames **33** by utilizing the suspension cross member (subframe) **30** without providing any other particular member.

The guide portion **78** is the radiator fin to cool the non-contact charger **70.**

According to this structure, the guide portion **78** can be configured by using the radiator fin.

While the present embodiment is configured such that the rear fastening member **77a** of the rear-side fixation portion **77** gets broken due to the impact load applied from the vehicle forward side, a slit portion **77c,** which is shown by a two-dotted broken line in FIG. **5****,** may be provided such that it extends forward from a hole **77b** of the rear-side fixation portion **77** where the rear fastening member **77a** is inserted, for example. Thereby, when the impact load is applied from the vehicle forward side, the non-contact charger **70** moves rearward and the rear fastening member **77a** passes through the slit portion **77c,** then gets detached from the rear-side fixation portion **77.** Consequently, fastening of the rear-side fixation portion 77 and the side frame **33** is released.

While it is provided at the non-contact charger **70** (casing **73)** in the present embodiment, as shown by a two-dotted broken line in FIG. **6****,** the guide portion **78** may be formed by configured the rear cross member **35** such that it is inclined forward and upward, or an inclined portion may be attached in front of the rear cross section **35.**

Further, the upper end of the inclined side portion **78c** is positioned at the upper-rear edge portion of the protrusion portion **75** in the present embodiment. However, the upper end of the inclined side portion **78c** may be positioned below the upper-rear edge portion as long as its position does not hinder the downward-and-rearward moving of the non-contact charger **70** by preventing the rear cross member **35** from contacting the step difference generated between the rear face portion **75c** of the protrusion portion **75** and the inclined side portion **78c** when the impact load is applied.

## Claims

1. A front structure (1) of a vehicle, comprising:
a pair of right-and-left side frames (33) extending in a longitudinal direction;
a cross member (34) provided to extend between the side frames (33); and
an on-board equipment positioned between the side frames (33), the on-board equipment having a body portion (74),
wherein said on-board equipment comprises front-side fixation portions (76) fixed to said cross member (34) and rear-side fixation portions (77) positioned in back of said front-side fixation portions (76) and fixed to said side frames (33) through fixation structures (X) in which the on-board equipment is detachable from the side frames (33) when receiving an impact load applied from a front side of the structure.

2. The front structure of claim 1, wherein the on-board equipment further comprises a protrusion portion (75), which protrudes upward beyond the body portion (74), wherein preferably front-side and back-side fixation portions (76, 77) protrude in a flange shape, in a width direction, from a peripheral edge portion of the body portion (74).

3. The front structure of claim 2, wherein the on-board equipment further comprises a inclined guide portion (78), which connects an upper face of the body portion (74) and a rear face of the protrusion portion (75) in a braced shape.

4. The front structure of claim 3, wherein an inclination angle (α) of the guide portion (78) is set at 20° or more and 45° or less.

5. The front structure of any one of the preceding claims, further comprising a rear cross member (35) arranged in back of said cross member (34), wherein said on-board equipment and/or said rear cross member (35) include a guide portion (78) to move the on-board equipment downward when the on-board equipment and the rear cross member (35) contact each other due to the impact load applied from the front side.

6. The front structure of claim 5, wherein the body portion (74) is fixed to the side frames (33) at the rear-side fixation portions (77) in a state where a rear-upper face portion (74f) of the body portion (74) contacts a lower face (35b) of the rear cross member (35).

7. The front structure of claim 5 or 6, wherein said guide portion (78) is provided at said on-board equipment, and the guide portion (78) is an inclination portion, which faces a front face (35a) of said rear cross member (35) and is inclined such that it slopes downward towards the rear side.

8. The front structure of any one of claims 5 to 7, wherein said rear cross member (35) is arranged in the vicinity of a rear end (78d) of said guide portion (78).

9. The front structure of any one of the preceding claims, wherein said fixation structure (X) is configured to get broken when the impact load is applied from the front side.

10. The front structure of any one of the preceding claims, wherein said on-board equipment comprises a front-upper face portion (74e) fixed to a lower face (34b) of said cross member (34) and a protrusion portion (75) having a front face (75a) which faces a rear face (34c) of the cross member (34).

11. The front structure of claim 10, wherein said on-board equipment comprises a rear-upper face portion (74f) extending rearward from said protrusion portion (75), and said guide portion (78) is provided to stand toward a rear-upper edge portion (75e) of said protrusion portion (75) from said rear-upper face portion (74f).

12. The front structure of any one of claims 5 to 11, wherein said rear cross member (35) is a suspension cross member (30) to support a suspension.

13. The front structure of any one of claims 3 to 12, wherein said on-board equipment is a non-contact charger (70), and said guide portion (78) is a radiator fin to cool said non-contact charger (70).

14. The front structure of claim 13, wherein the on-board equipment comprises a casing (73) comprising the body portion (74), where a power-receiving coil (71) is stored, and comprising the protrusion portion (75) where a rectifier (72) is stored.

15. A vehicle comprising a front structure of any one of the preceding claims.
